# FASCICULE DE BREVET EUROPEEN

(11) **EP 3 245 170 B1**
(45) Date de publication et mention de la délivrance du brevet: **08.05.2019**
(21) Numéro de dépôt: 16701836.5
(22) Date de dépôt: 07.01.2016
(51) Int. Cl.: C04B 7/47, F27D 15/02

(54) **PROCÉDÉ DE PRODUCTION DE MATÉRIAU FRITTE A PARTIR DE MATIÈRES CRUES MINÉRALES**
VERFAHREN ZUR HERSTELLUNG VON GESINTERTEM MATERIAL AUS ANORGANISCHEN ROHSTOFFEN
METHOD FOR PRODUCING SINTERED MATERIAL FROM AN INORGANIC RAW MATERIALS

(30) Priorité: 12.01.2015 FR 1550200
(43) Date de publication de la demande: 22.11.2017
(73) Titulaire: Fives FCB, 59650 Villeneuve d'Ascq (FR)
(72) Inventeur: CORDONNIER, Alain, 59650 Villeneuve D'ascq (FR)
(74) Mandataire: Bureau Duthoit Legros Associés
(86) Numéro de dépôt international: PCT/FR2016/050024
(87) Numéro de publication internationale: WO 2016/113487

(56) Documents cités:
- WO-A1-2009/156614
- FR-A5- 2 102 623

## Description

L'invention concerne un procédé de production de matériau fritté à partir de matières crues minérales, mis en oeuvre dans une installation comprenant un préchauffeur à cyclones, un four rotatif et un refroidisseur à grilles. Le domaine de l'invention est celui des procédés et installations pour la fabrication de clinker de ciment.

La fabrication de clinker de ciment utilise le plus souvent un procédé de cuisson dit en voie sèche, où les matières premières préalablement broyées, sont calcinées puis frittées dans un four rotatif. Afin de diminuer les besoins énergétiques de l'opération, des échangeurs ont été ajoutés en amont et en aval du four rotatif, appelés respectivement préchauffeur et refroidisseur de clinker, et récupèrent respectivement en amont dans la matière la chaleur contenue dans les fumées sortant du four et en aval dans des gaz la chaleur contenue dans les matières frittées. Ainsi, alors que les produits sortant du four ont une température supérieure à 1000°C, les flux de gaz chauds, air ou fumées, qui sortent de ces échangeurs sans être utilisés pour l'opération de cuisson ne sont plus qu'à des températures généralement inférieures à 350°C. Toutefois, ils contiennent encore une quantité de chaleur qui peut représenter 20 à 30% de l'énergie introduite sous forme de combustible dans l'installation de cuisson.

Les gaz chauds issus du préchauffeur sont généralement utilisés en dehors de l'opération de cuisson pour le séchage des matières premières qui servent à la fabrication du clinker. Mais seule une partie est nécessaire sauf dans des cas où l'humidité des matières est très élevée. L'air chaud issu du refroidisseur à clinker est partiellement utilisé comme air de combustion dans l'installation ; le plus souvent cela ne représente qu'environ la moitié du volume d'air chaud produit. Il reste donc en général des flux de gaz chauds constituant une source d'énergie disponible. En particulier, le flux d'air chaud issu du refroidisseur à clinker est le plus souvent inutilisé.

La récupération de chaleur perdue à des fins de production d'électricité est connue et pratiquée dans de nombreuses usines. Le procédé le plus courant consiste à diriger les gaz chauds vers des échangeurs constitués de tubes où circule de l'eau que la chaleur transforme en vapeur, qui fait mouvoir la turbine d'un générateur d'électricité. On peut disposer d'un échangeur par flux de gaz, ou bien rejoindre les flux avant de les traiter dans un seul échangeur. Compte tenu de la température modérée des gaz, le rendement global de conversion de l'énergie en électricité est faible, et d'autres fluides que l'eau sont parfois utilisés, tels que le pentane par exemple, dans le but d'améliorer la performance. Malgré cela, le rendement reste inférieur à 20% ce qui est nettement inférieur au rendement d'une centrale thermique classique de production d'électricité.

Dans le cas du refroidisseur de clinker, le principe de fonctionnement du refroidisseur à grilles conduit à produire des flux d'air à températures décroissantes, de l'amont vers l'aval selon le sens de déplacement de la matière dans le refroidisseur. Ainsi, l'air chaud récupéré en premier, en un ou plusieurs flux, usuellement dénommés air secondaire et air tertiaire, se situe à des températures allant typiquement de 750°C à 1200°C et est utilisé comme air de combustion dans l'installation typiquement au niveau des brûleurs du four rotatif et/ou du précalcinateur de l'installation, tandis que la température moyenne de l'air non utilisé, excédentaire par rapport au besoin en air de combustion, est inférieure à environ 250°C. Ce niveau de température n'est pas propice à un bon rendement de conversion.

Afin d'augmenter le rendement de conversion, il est connu et couramment pratiqué de séparer l'air inutilisé en deux flux, un flux intermédiaire dont la température est plus élevée, supérieure à 300°C, et un flux d'exhaure que l'on abandonne. Ceci est décrit par exemple dans le document [Tatsuo Ino - Waste heat recovery power generation in cement plants - VdZ seminar, Düsseldorf, September 2009].

Ceci oblige à un compromis entre la quantité de chaleur disponible que l'on abandonne et le gain de température de l'air valorisé qui permet une amélioration de rendement de conversion. L'abandon d'une partie de la chaleur disponible est un inconvénient notable de la méthode.

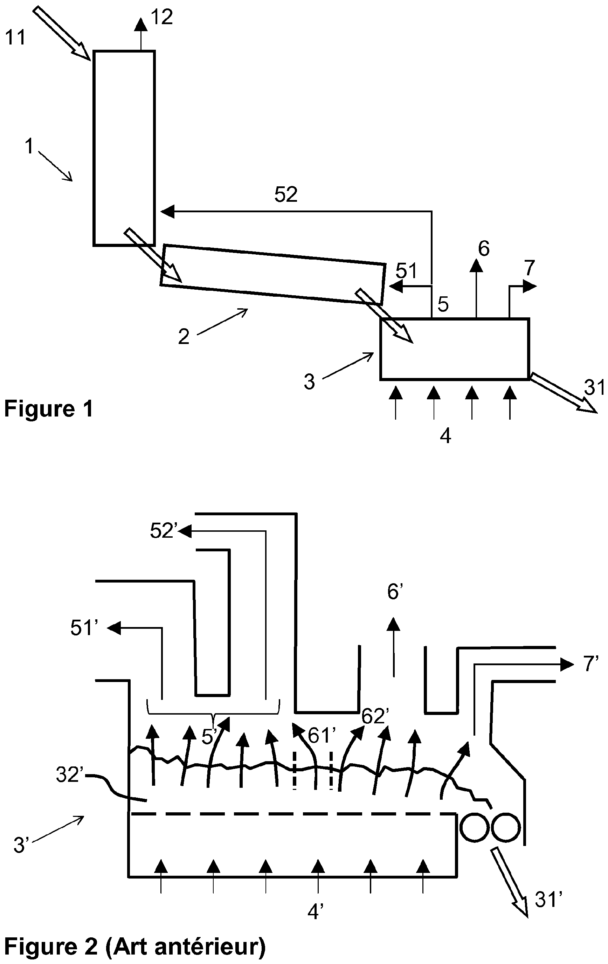

Un tel état de la technique est encore illustré à la figure 1 du document WO 2009/156614A1 avec une installation de fabrication de clinker de ciment comprenant un préchauffeur à cyclones, un four rotatif et un refroidisseur à clinker. Dans une telle installation, on préchauffe les matières crues dans le préchauffeur à cyclones, on les pré-calcine dans un précalcinateur associé au préchauffeur à cyclones, on calcine les matières préchauffées dans le four rotatif, et on refroidit les matières calcinées dans le refroidisseur. Le clinker sortant du four est refroidi dans le refroidisseur par soufflage d'air sur le clinker chaud. L'air chaud produit par le refroidisseur est divisé en plusieurs flux, à savoir de l'air dit secondaire utilisé au four comme air de combustion, de l'air dit tertiaire utilisé comme air de combustion au précalcinateur, et de l'air excédentaire par rapport au besoin en air de combustion de l'installation. Selon la figure 8, seule la partie la plus chaude de ce flux d'air excédentaire est utilisée dans un échangeur, repéré 9, en vue de la production d'électricité, une autre partie de l'air, de température inférieure, étant conduite séparément, en aval, et abandonnée.

Le but de la présente invention est de pallier les inconvénients précités en proposant un procédé de production de matériau fritté à partir de matières crues minérales, mis en oeuvre dans une installation comprenant un préchauffeur à cyclones, un four rotatif, et un refroidisseur à grilles par soufflage d'air, utilisant une partie de l'air chaud comme air de combustion dans l'installation, et une autre partie, excédentaire par rapport au besoin en air de combustion, pour la production d'énergie, en particulier d'électricité, et avantageusement de rendement supérieur par rapport à l'état de la technique ci-dessus décrit.

Un autre but de la présente invention est de proposer, au moins selon un mode de réalisation de l'invention, un procédé permettant de ne rejeter dans l'atmosphère que des gaz de température modérée, en particulier inférieure à 65°C, par exemple égale ou inférieure à la température ambiante.

D'autres buts et avantages apparaîtront au cours de la description qui va suivre qui n'est donnée qu'à titre indicatif et qui n'a pas pour but de la limiter.

Aussi l'invention concerne un procédé de production de matériau fritté à partir de matières crues minérales, mis en oeuvre dans une installation comprenant :
- un préchauffeur à cyclones,
- un four rotatif,
- un refroidisseur à grilles,
procédé dans lequel on préchauffe les matières crues dans le préchauffeur à cyclones, éventuellement on les pré-calcine dans un précalcinateur associé au préchauffeur à cyclones, on calcine et on fritte les matières préchauffées dans le four rotatif, et on refroidit les matières calcinées par soufflage d'air de refroidissement dans le refroidisseur à grilles,
et dans lequel on sépare l'air chaud engendré par le refroidisseur à grilles en trois fractions, lesdites trois fractions d'air chand étant à températures décroissantes, comprenant respectivement, de l'amont vers l'aval, selon le sens d'avance des matières dans le refroidisseur à grilles, une première fraction d'air servant d'air de combustion au niveau d'au moins ladite zone de combustion du four rotatif et/ou du précalcinateur éventuel de l'installation, une deuxième fraction d'air, intermédiaire, et une troisième fraction d'air, de température inférieure.

Selon l'invention, on dirige au moins une partie de l'air de la troisième fraction vers ladite au moins une zone de combustion du four rotatif et/ou du précalcinateur pour être utilisée comme air de combustion avec ladite première fraction d'air, et on valorise ladite deuxième fraction d'air, excédentaire par rapport aux besoins en air de combustion, pour la production d'énergie, en particulier d'électricité.

Ainsi, l'invention consiste à augmenter la température et l'enthalpie de la deuxième fraction d'air, intermédiaire, en utilisant comme air de combustion, non seulement, et de manière classique, la première fraction d'air, de température supérieure, mais également, et selon l'invention, au moins une partie de l'air de la troisième fraction, de température inférieure, qui selon l'état de la technique précédemment décrit, est seulement un flux d'exhaure excédentaire.

Comme les besoins en air de combustion de l'installation sont définis, le débit de la partie de l'air de la troisième fraction, de température inférieure, utilisé comme air de combustion diminue d'autant le débit d'air nécessaire de la première fraction d'air pour couvrir les besoins en air de combustion, et par comparaison à l'état de la technique précédemment décrit. Ce débit d'air très chaud ainsi remplacé permet avantageusement de nourrir la deuxième fraction d'air, intermédiaire, et ainsi d'en augmenter sa température et son enthalpie. Un tel principe sera décrit et illustré plus en détail dans la suite de la description.

L'invention permet ainsi d'utiliser l'air de la deuxième fraction dans un échangeur, tel qu'une chaudière eau/vapeur, associée à une turbine, ou tout autre appareil permettant la conversion en énergie électrique.

Selon un mode de réalisation, on régule le débit de ladite partie de l'air de ladite troisième fraction pour que la température de ladite deuxième fraction d'air, intermédiaire, soit maintenue constante à une valeur prédéterminée (par exemple 450°C), en dépit des fluctuations du procédé notamment liées aux variations instantanées de débit, de granulométrie et de température du clinker à l'entrée du refroidisseur. A cet effet, on augmente le débit de ladite partie de l'air de la troisième fraction utilisée comme air de combustion pour faire augmenter la température de la deuxième fraction ou compenser sa tendance à la baisse. On diminue le débit de la partie de l'air de la troisième fraction utilisée comme air de combustion pour provoquer l'effet inverse, à savoir la diminution de la température de la deuxième fraction d'air.

Selon un mode de réalisation, ladite installation comprend ledit précalcinateur associé au préchauffeur à cyclones et dans lequel la première fraction d'air comprend de l'air secondaire utilisé comme air de combustion au four rotatif et de l'air tertiaire, conduit de manière séparée jusqu'audit précalcinateur.

Selon un mode de réalisation, ladite partie de l'air de ladite troisième fraction utilisée comme air de combustion est mélangée à l'air tertiaire, sans être mélangée à l'air secondaire.

Selon un mode de réalisation, on utilise l'air refroidi par ledit échangeur comme air de refroidissement audit refroidisseur à grilles. Une telle disposition permet de supprimer tout flux d'exhaure du refroidisseur, en particulier dans le cas où la troisième fraction d'air est utilisée en totalité comme air de combustion. Selon une autre alternative pour laquelle seule une partie de l'air de la troisième fraction est utilisée comme air de combustion, mélangée avec l'air de combustion de la première fraction, une autre partie restante étant conduite de manière séparée de ladite partie, il est encore possible de supprimer tout flux d'exhaure au refroidisseur en utilisant cette partie restante de la troisième fraction comme air de refroidissement audit refroidisseur à grilles.

Selon un mode de réalisation, on dirige les fumées issues du préchauffeur à cyclones vers un échangeur en vue de la conversion de chaleur en électricité.

Selon un mode de réalisation, les échangeurs traitant respectivement la deuxième fraction d'air et les fumées du préchauffeur à cyclones coopèrent pour la production d'électricité. Par exemple, l'un des échangeurs peut être celui d'un générateur de vapeur, l'autre celui d'un surchauffeur de vapeur.

Le procédé trouvera une application particulière pour la fabrication de clinker de ciment.

L'invention sera mieux comprise à la lecture de la description suivante accompagnée des dessins en annexe parmi lesquels :
- La figure 1 illustre schématiquement une installation de cuisson et de frittage de matières telles que les matières cimentières,
- La figure 2 est une vue de détail illustrant les différents flux d'air chaud engendré par le refroidisseur à grilles de l'installation de la figure 1 et telle que connue de l'état de la technique,
- La figure 3 une vue de détail illustrant les différents flux d'air chaud engendré par le refroidisseur à grilles de l'installation de la figure 1 et conformément à l'invention,
- La figure 4 est un graphique représentant, en ordonnées, la température locale du flux d'air chaud, et en fonction sa position dans le refroidisseur,
- La figure 5 illustre schématiquement une installation de cuisson et de frittage de matières telles que les matières cimentières, conforme à l'invention selon un mode de réalisation.

Nous commençons tout d'abord par décrire une installation dans laquelle les matières crues minérales 11 sont soumises à un traitement, successivement de préchauffage dans un préchauffeur à cyclones 1, éventuellement de pré-calcination dans un pré-calcinateur associé au préchauffeur, puis de calcination et de frittage dans un four rotatif 2. Les matières chaudes 32 sortant du four rotatif 2 sont refroidies dans un refroidisseur à grilles 3, d'où elles ressortent sous forme de matières frittées refroidies 31. Le refroidissement des matières chaudes 32 s'opère par soufflage d'air 4 sous la grille du refroidisseur 3, qui au contact des matières chaudes engendre de l'air chaud dont la température locale décroît de l'amont vers l'aval, selon le sens de déplacement des matières dans le refroidisseur.

Il est connu d'extraire divers flux de l'air chaud du refroidisseur, de températures décroissantes, d'amont vers l'aval dans le refroidisseur, respectivement une première fraction d'air 5' destinée à couvrir les besoins en air de combustion de l'installation, une seconde fraction d'air intermédiaire 6', et une troisième fraction d'air 7'.

La première fraction d'air peut ainsi comprendre un air dit secondaire 51', canalisé vers le ou les brûleurs du four rotatif 2' où il sert de comburant pour un combustible, et un air tertiaire 52', de température inférieure, canalisé de manière séparée vers le ou les brûleurs du précalcinateur (non illustré) où il sert de comburant pour un combustible.

La figure 2 montre le schéma d'un refroidisseur à grilles 3' sous lequel on souffle de l'air 4' qui en traversant le lit de matières chaudes 32' donne naissance à nombre de veines d'air chaud qui se regroupent en air secondaire 51', tertiaire 52', en une seconde fraction d'air 6, intermédiaire et en une troisième fraction d'air 7, d'exhaure, dont la répartition dépend de l'aspiration exercée à chacune des sorties. On montre l'exemple d'une veine d'air 61' qui se dirige vers l'air tertiaire 52' alors que la veine voisine 62' se dirige vers la seconde fraction d'air 6'intermédiaire.

Tel qu'illustré à la figure 2, et selon l'état de la technique connu du demandeur, l'air secondaire 51' et l'air tertiaire 52' couvrent les besoins en air de combustion des brûleurs du four rotatif 2 et du précalcinateur. La seconde fraction d'air 6' et la troisième fraction 7' représentent un débit d'air en excès par rapport au besoin de combustion de l'installation. Selon cet art antérieur, il est connu de valoriser cet air en excès dans un ou plusieurs échangeurs en vue de la production d'électricité. Afin d'augmenter le rendement de conversion, il est courant de n'utiliser dans les échangeurs que la seconde fraction d'air 6', intermédiaire, typiquement de température supérieure ou égale à 300°C, et de rejeter dans l'atmosphère la troisième fraction d'air 7', de température trop basse, et sans valorisation de la chaleur contenue.

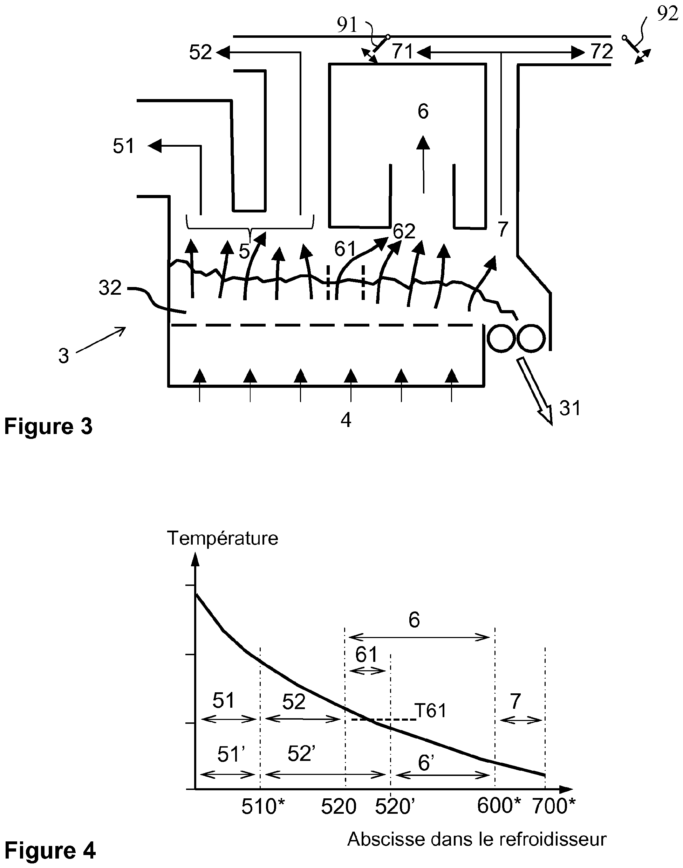

La figure 3 illustre, une variante du procédé selon l'invention. Les matières chaudes 32 sortant du four sont refroidies dans le refroidisseur à grilles par soufflage d'air 4. L'air au contact des matières se réchauffe, engendrant de l'air chaud qui est divisé en trois flux, d'amont vers l'aval, selon le sens d'avance des matières dans le refroidisseur 3, à savoir respectivement, une première fraction d'air 5, une deuxième fraction d'air 6, intermédiaire, et une troisième fraction d'air 7.

La première fraction d'air 5, la plus chaude, est utilisée comme air de combustion dans l'installation en particulier dans le ou les brûleurs du four rotatif 3 et/ou du précalcinateur. La première fraction d'air 5 peut être divisée en un air secondaire 51 utilisé comme air de combustion dans le ou les brûleurs du four rotatif, et en un air tertiaire 52 utilisé comme air de combustion dans le ou les brûleurs du précalcinateur. En revanche, et à la différence de l'état de la technique de la figure 2, la première fraction d'air 5 ne couvre pas à elle seule les besoins en air de combustion de l'installation. A cet effet, et selon l'invention, il est nécessaire de lui adjoindre tout ou partie de l'air de la troisième fraction d'air 7. Ainsi et selon le mode de réalisation de la figure 3, les besoins en air de combustion de l'installation sont satisfaits par la première fraction d'air 5, et une partie 71 de la troisième fraction d'air 7.

Comme les besoins en air de combustion de l'installation sont définis, le débit de la partie 71 de l'air de la troisième fraction 7, de température inférieure, utilisé comme air de combustion diminue d'autant le débit d'air nécessaire de la première fraction d'air 5 pour couvrir les besoins en air de combustion, et par comparaison à l'état de la technique précédemment décrit et illustré à la figure 2. Ce débit d'air très chaud ainsi remplacé permet alors avantageusement de nourrir la deuxième fraction d'air 6, intermédiaire, et ainsi d'en augmenter sa température et son enthalpie. Ceci est illustré en détail à la figure 3 : on observe ainsi que la veine d'air 61 se détourne de l'air tertiaire 52 vers lequel elle se dirigeait dans un fonctionnement classique, illustré à la figure 2, (voir veine 61' illustrée à la figure 2 selon l'état de la technique). Cette veine d'air 61 vient désormais nourrir la seconde fraction d'air 6, intermédiaire. Selon ce mode de réalisation, seule une partie 71 de la troisième fraction d'air est dirigé vers la première fraction d'air 5, en particulier l'air tertiaire 52, l'autre partie étant évacuée.

Le débit de ladite partie d'air 71 de la troisième fraction d'air 7 peut être ajusté pour faire varier le débit de la veine d'air 61 et ainsi compenser des fluctuations de l'enthalpie de la deuxième fraction d'air 6 qui sont le résultat des variations instantanées de débit, de granulométrie ou de température du clinker à l'entrée du refroidisseur 3.

Ainsi, la température de la deuxième fraction d'air 6 peut être maintenue constante à une valeur prédéterminée par une régulation du débit de ladite partie 71 de la troisième fraction d'air 7 utilisée comme air de combustion. Ce réglage du débit peut être obtenu grâce au réglage de la position d'au moins un organe de réglage 91, 92, tel qu'un volet situé sur au moins l'une des conduites qui véhiculent les parties 71 et 72 de la troisième fraction d'air. Par exemple, un premier organe de réglage 91, tel qu'un volet, peut être prévu sur la conduite véhiculant la partie 71 de l'air utilisée comme air de combustion, et un deuxième organe de réglage 92 peut être prévu sur la conduite de l'autre partie d'air 72. Lors de la régulation, on augmente le débit de ladite partie 71 de l'air de la troisième fraction d'air 7 utilisée comme air de combustion pour augmenter la température de la deuxième fraction d'air 6 ou compenser sa tendance à la baisse, en particulier lorsque la température de la deuxième fraction est inférieure à la valeur prédéterminée. On diminue le débit de la partie 71 de l'air de la troisième fraction d'air 7 utilisée comme air de combustion pour provoquer l'effet inverse, à savoir la diminution de la température de la deuxième fraction 6, en particulier lorsque la température de la deuxième fraction d'air est supérieure à la valeur prédéterminée.

La valeur prédéterminée, consigne de régulation, peut être choisie entre 300°C et 500°C, et en particulier entre 350°C et 480°C. Cette régulation peut être mise en oeuvre par un automate, qui comprend au moins pour entrée le signal d'un capteur de température ciblant la température de la deuxième fraction d'air 6, et pour sortie(s) au moins un signal de commande d'au moins un actionneur dudit au moins un organe de réglage 91, 92.

Le graphique de la figure 4 illustre l'évolution de la température de la matière dans le refroidisseur en fonction de la position sur la grille du refroidisseur entre l'entrée et la sortie. Vers l'entrée, la température peut être proche de 1450°C tandis qu'à la sortie la température peut être proche de 100°C. On définit les abscisses 510^{∗}, 520', 600^{∗}, 700^{∗} auxquelles les veines d'air se séparent pour donner naissance aux flux 51',52', 6' et 7' selon l'état de la technique de la figure 2, et les abscisses 510^{∗}, 520, 600^{∗}, 700^{∗} auxquelles les veines d'air se séparent pour donner naissance aux flux 51, 52, 6 et 7 selon le mode de réalisation de l'invention de la figure 3. On distingue le flux de la veine 61 qui se joint à la seconde fraction d'air 6, intermédiaire, selon l'invention. Sa température moyenne est supérieure à la température de toutes les parties du flux de la seconde fraction d'air 6' selon l'état de la technique de la figure 2. Au final la température moyenne et l'enthalpie de la seconde fraction intermédiaire 6 selon le procédé de l'invention sont supérieures à la température et à l'enthalpie de la seconde fraction intermédiaire 6' selon l'état de la technique illustré à la figure 2.

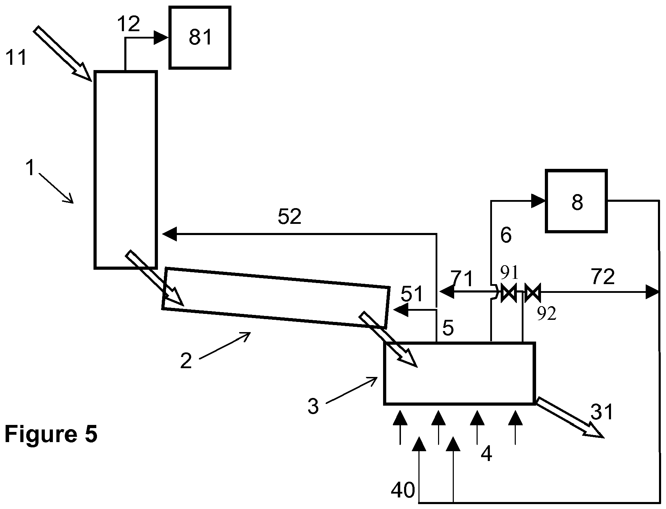

L'installation de la figure 5, conforme à l'invention selon un mode de réalisation, comprend un préchauffeur à cyclones 1, un four rotatif 2, et un refroidisseur à grilles 3. On préchauffe les matières crues minérales 11 dans le préchauffeur à cyclones 1, on les pré-calcine dans un précalcinateur éventuel à la base du préchauffeur 1, avant de les calciner et de les fritter dans le four rotatif 2. Les matières chaudes 32 sont refroidies dans le refroidisseur à grilles 3, d'où elles ressortent sous forme de matières frittées refroidies. On souffle de l'air 4 sous la grille du refroidisseur, qui au contact des matières chaudes se réchauffe et produit de l'air chaud dont la température décroît d'amont vers l'aval du refroidisseur 3. On sépare l'air chaud en trois fractions, de l'amont vers l'aval, selon le sens d'avance des matières dans le refroidisseur à grilles, lesdites trois fractions d'air chaud étant à températures décroissantes, comprenant respectivement une première fraction d'air 5 servant d'air de combustion au niveau d'au moins ladite zone de combustion (du four rotatif et/ou du précalcinateur éventuel de l'installation), une deuxième fraction d'air 6, intermédiaire, et une troisième fraction d'air 7, de température inférieure.

La première fraction d'air 5 peut comprendre de l'air secondaire 51, destiné à servir d'air de combustion au four rotatif 2 et de l'air tertiaire 52 destiné à servir d'air de combustion au précalcinateur. Une partie 71 de la troisième fraction d'air 7 est mélangée à l'air tertiaire 52, pour servir d'air de combustion au précalcinateur. Selon ce mode de réalisation, l'autre partie 72 de la troisième fraction 7, ainsi que la deuxième fraction d'air 6 sont en excès par rapport au besoin en air de combustion de l'installation.

La deuxième fraction d'air 6, de température moyenne supérieure à l'air de la partie 72, est conduite vers un échangeur 8 en vue de la conversion de chaleur en énergie électrique. Cet échangeur 8 peut être celui d'une chaudière eau/vapeur, destiné à coopérer avec une turbine couplée à un alternateur, ou tout autre appareil connu de l'homme du métier pour transformer de la chaleur en énergie électrique. Après transfert thermique, l'air refroidi par l'échangeur 8 peut être dirigé vers le refroidisseur à grilles 3 pour servir d'air de refroidissement 40. L'autre partie 72 de la troisième fraction, en excès par rapport au besoin en air de combustion, peut être dirigée vers le refroidisseur 3 pour servir également comme air de refroidissement 40 et sans coopérer avec l'échangeur 8. Selon ce mode de réalisation, le refroidisseur 3 ne provoque pas de rejet d'air chaud dans l'atmosphère.

Selon un mode de réalisation, les fumées du four rotatif alimentent les différents cyclones du préchauffeur 1, et ont été partiellement refroidies dans le préchauffeur par contact et les échanges thermiques avec les matières minérales crues 11. Selon un mode de réalisation, on dirige les fumées 12 issues du préchauffeur à cyclones 1 vers un échangeur 81 en vue de la conversion de chaleur en électricité. Les échangeurs 8 et 81 traitant respectivement la deuxième fraction d'air 6 et les fumées 12 du préchauffeur à cyclones peuvent éventuellement coopérer pour la production d'électricité. L'un des échangeurs, par exemple l'échangeur 81 peut faire partie d'un générateur de vapeur, l'autre échangeur, par exemple l'échangeur 8, peut faire partie d'un surchauffeur de vapeur, ou inversement en fonction des températures de ces flux.

### Exemple 1

On considère une installation de cuisson de cimenterie qui consomme 2955 kJ en énergie combustible par kg de clinker produit, avec un refroidisseur qui reçoit 1,837 Nm³ d'air par kg de clinker à refroidir. On produit 0,909 Nm³ d'air de combustion, respectivement 0,335 Nm³ d'air secondaire à 1160°C et 0,574 Nm³ d'air tertiaire à 830°C. L'air non utilisé a un volume de 0,928 Nm³ et une température de 223°C.

En vue de récupérer la chaleur inutilisée et de la convertir en énergie électrique en utilisant une chaudière eau/vapeur, on sépare l'air inutilisé en deux flux, un flux intermédiaire de 0,664 Nm³ à 260°C dont la température augmentée permet d'obtenir un meilleur rendement de conversion, et un flux d'exhaure de 0,264 Nm³ à 130°C, que l'on abandonne. Ainsi, pour une installation qui produit 3000 t/d de clinker, on peut produire 0,77 MW ce qui correspond à un rendement de 17,1%.

Selon l'invention, on dirige le flux d'exhaure (i.e. la troisième fraction d'air) vers l'air tertiaire, et l'air tertiaire remplacé se mélange au flux intermédiaire (i.e. la deuxième fraction d'air). L'abaissement de température de l'air de combustion provoque une augmentation de consommation thermique qui atteint 3285 kJ par kg de clinker. En tenant compte de l'augmentation correspondante du besoin en air de combustion, on dispose alors d'un flux intermédiaire de 0,878 Nm³ à 411°C. Pour l'installation de 3000 t/d déjà mentionnée, on peut produire 2,73 MW, ce qui correspond à un rendement de 22,4% et à une énergie multipliée par 3,5. Le rendement marginal de l'énergie combustible ajoutée est de 18,5% ce qui est économiquement intéressant dans une cimenterie qui consomme des combustibles alternatifs à bas prix.

### Exemple 2

Pour la même installation que celle décrite dans l'exemple 1, on produit de l'énergie électrique en utilisant un cycle de Rankine organique. On sépare l'air inutilisé en deux flux, un flux intermédiaire de 0,729 Nm³ à 250°C et un flux d'exhaure de 0,199 Nm³ à 123°C que l'on abandonne. Ainsi, pour une installation qui produit 3000 t/d de clinker, on peut produire 0,52 MW ce qui correspond à un rendement de 15,2%.

Selon une mise en oeuvre de l'invention, on dirige une partie du flux d'exhaure (i.e. la troisième fraction d'air) vers l'air tertiaire, et l'air tertiaire remplacé se mélange au flux intermédiaire (i.e. la deuxième fraction d'air) : 0,115 Nm³ sont ainsi redirigés tandis que l'on abandonne encore 0,084 Nm³. L'abaissement de température de l'air de combustion provoque une augmentation de consommation thermique qui atteint 3104 kJ par kg de clinker. En tenant compte de l'augmentation correspondante du besoin en air de combustion, on dispose alors d'un flux intermédiaire de 0,818 Nm³ à 350°C. Pour l'installation de 3000 t/d déjà mentionnée, on peut produire 1,46 MW, ce qui correspond à un rendement de 19,6% et à une énergie multipliée par 2,8. Le rendement marginal de l'énergie combustible ajoutée est de 23,5% ce qui est économiquement intéressant dans une cimenterie qui consomme des combustibles alternatifs à bas prix.

L'invention s'applique à toute installation de cuisson de matières minérales qui produit une matière frittée que l'on refroidit par soufflage d'air dans un refroidisseur à grilles et dont l'air chaud ainsi produit est partiellement utilisé comme air de combustion dans l'installation de cuisson.

Naturellement d'autres modes de réalisation de l'invention auraient pu être envisagés par l'homme du métier sans pour autant sortir du cadre de l'invention tel que défini par les revendications ci-après.

### NOMENCLATURE

### Invention :

1. Préchauffeur à cyclones,
2. Four rotatif,
3. Refroidisseur à grilles,
4. Air de refroidissement,
5. Première fraction d'air (Air chaud),
6. Deuxième fraction d'air (Air chaud),
7. Troisième fraction d'air (Air chaud),
8, 81. Echangeurs,
11. Matières crues minérales,
12. Fumées du préchauffeur,
31. Matières frittées refroidies,
32. Matières chaudes,
40. Air de refroidissement
51. Air secondaire,
52. Air tertiaire,
61, 62. Veines d'air (Deuxième fraction d'air 6),
71. Partie de l'air de la troisième fraction d'air 7 utilisée comme air de combustion,
72. Partie de la troisième fraction d'air 7 utilisée comme air de refroidissement,
91. Organe de réglage de débit (sur la conduite véhiculant la partie d'air 71),
92. Organe de réglage de débit (sur la conduite véhiculant la partie d'air 72),

### Art antérieur (Figure 2) :

3'. Refroidisseur à grilles,
4'. Air de refroidissement,
5'. Première fraction d'air
6'. Seconde fraction d'air,
7'. Troisième fraction d'air,
31'. Matières frittées refroidies,
32'. Matières chaudes,
51'. Air secondaire,
52'. Air tertiaire,
61', 62'. Veines d'air (respectivement de l'air tertiaire 52' et de la deuxième fraction d'air 6'),

## Revendications

1. Procédé de production de matériau fritté à partir de matières crues (11) minérales, mis en oeuvre dans une installation comprenant :
- un préchauffeur (1) à cyclones,
- un four rotatif (2),
- un refroidisseur à grilles (3),
procédé dans lequel on préchauffe les matières crues (11) dans le préchauffeur (1) à cyclones, éventuellement on les pré-calcine dans un précalcinateur associé au préchauffeur à cyclones, on calcine et on fritte les matières préchauffées dans le four rotatif (2), et on refroidit les matières calcinées par soufflage d'air de refroidissement (4,40) dans le refroidisseur à grilles (3), produisant ainsi de l'air chaud, et dans lequel on sépare l'air chaud en trois fractions, de l'amont vers l'aval, selon le sens d'avance des matières dans le refroidisseur à grilles, lesdites trois fractions d'air chaud étant à températures décroissantes, comprenant respectivement une première fraction d'air (5) servant d'air de combustion au niveau d'au moins la zone de combustion du four rotatif et/ou du précalcinateur éventuel de l'installation, une deuxième fraction d'air (6), intermédiaire, et une troisième fraction d'air (7), de température inférieure,
**caractérisé en ce que** :
on dirige au moins une partie (71) de l'air de la troisième fraction (7) vers ladite au moins une zone de combustion du four rotatif et/ou du précalcinateur pour être utilisée comme air de combustion avec ladite première fraction d'air (5), et on valorise ladite deuxième fraction d'air (6), excédentaire par rapport aux besoins en air de combustion, pour la production d'énergie.

2. Procédé selon la revendication 1, dans lequel on régule le débit de ladite partie (71) de l'air de ladite troisième fraction (7) utilisée comme air de combustion par l'action d'un ou plusieurs organes de réglage (91, 92) afin de maintenir la température de l'air de ladite deuxième fraction d'air (6) à une valeur prédéterminée, en augmentant le débit de ladite partie (71) de l'air de la troisième fraction utilisée comme air de combustion pour augmenter la température de la deuxième fraction (6) et en diminuant le débit de la partie (71) de l'air de la troisième fraction utilisée comme air de combustion pour provoquer l'effet inverse, à savoir la diminution de la température de la deuxième fraction d'air (6).

3. Procédé selon la revendication 2, dans lequel la valeur prédéterminée est choisie entre 350 °C et 480°C.

4. Procédé selon l'une des revendications 1 à 3, dans lequel ladite installation comprend ledit précalcinateur associé au préchauffeur à cyclones (1) et dans lequel la première fraction (5) comprend de l'air secondaire (51) utilisé comme air de combustion au four rotatif (2) et de l'air tertiaire (51), conduit de manière séparée jusqu'audit précalcinateur.

5. Procédé selon la revendication 4, dans lequel ladite partie (71) de l'air de ladite troisième fraction (7) utilisée comme air de combustion est mélangée à l'air tertiaire (52), sans être mélangée à l'air secondaire (51).

6. Procédé selon l'une des revendications 1 à 5, dans lequel on dirige ladite deuxième fraction d'air (6) vers un échangeur (8) en vue de la conversion de chaleur en énergie électrique.

7. Procédé selon la revendication 6, dans lequel on utilise l'air refroidi par ledit échangeur (8) comme air de refroidissement (40) audit refroidisseur à grilles (3).

8. Procédé selon l'une des revendications 1 à 7, dans lequel seule une partie (71) de l'air de la troisième fraction (7) est mélangée avec l'air de combustion de la première fraction (5), une autre partie (72) étant conduite de manière séparée de ladite partie (71).

9. Procédé selon la revendication 8, dans lequel on utilise ladite autre partie (72) de la troisième fraction (7) comme air de refroidissement (40) audit refroidisseur à grilles (3).

10. Procédé selon l'une des revendications 1 à 9, dans lequel on dirige les fumées (12) issues du préchauffeur à cyclones (1) vers un échangeur (81) en vue de la conversion de chaleur en électricité.

11. Procédé selon la revendication 6 ou 7 et 10, dans lequel les échangeurs (8) et (81) traitant respectivement la deuxième fraction d'air (6) et les fumées (12) du préchauffeur à cyclones coopèrent pour la production d'électricité.

12. Procédé selon l'une des revendications 1 à 11, dans lequel ledit matériau fritté est du clinker de ciment.

## Patentansprüche

1. Verfahren zur Herstellung eines Sintermaterials aus mineralischen Rohstoffen (11), das in einer Anlage eingesetzt wird, umfassend:
- einen Zyklonvorwärmer (1),
- Drehofen (2),
- einen Schubrostkühler (3),
wobei bei dem Verfahren die Rohstoffe (11) in dem Zyklonvorwärmer (1) vorgewärmt werden, eventuell in einem Kalzinator, der dem Zyklonvorwärmer zugeordnet ist, vorkalziniert werden, die vorgewärmten Stoffe im Drehofen (2) kalziniert und gesintert werden, und die kalzinierten Stoffe durch Einblasen von Kühlluft (4, 40) in den Schubrostkühler (3) gekühlt werden, wodurch Warmluft erzeugt wird, und bei dem die Warmluft in drei Fraktionen von stromaufwärts nach stromabwärts in Vorschubrichtung der Stoffe im Schubrostkühler getrennt wird, wobei die drei Warmluftfraktionen abnehmende Temperaturen haben, umfassend jeweils eine erste Luftfraktion (5), die als Verbrennungsluft im Bereich mindestens der Verbrennungszone des Drehofens und/oder des möglichen Kalzinators der Anlage dient, eine zweite Zwischenluftfraktion (6) und eine dritte Luftfraktion (7) mit einer niedrigeren Temperatur,
**dadurch gekennzeichnet, dass**:
mindestens ein Teil (71) der Luft der dritten Fraktion (7) zu der mindestens einen Verbrennungszone des Drehofens und/oder des Kalzinators gelenkt wird, um als Verbrennungsluft mit der ersten Luftfraktion (5) verwendet zu werden, und die zweite Luftfraktion (6), die im Hinblick auf den Bedarf an Verbrennungsluft überschüssig ist, für die Energieerzeugung verwertet wird.

2. Verfahren nach Anspruch 1, bei dem die Menge des Teils (71) der Luft der dritten Fraktion (7), die als Verbrennungsluft verwendet wird, durch die Wirkung eines oder mehrerer Regulierungselemente (91, 92) reguliert wird, um die Temperatur der Luft der zweiten Luftfraktion (6) auf einem vorbestimmten Wert zu halten, wobei die Menge des Teils (71) der Luft der dritten Fraktion, die als Verbrennungsluft verwendet wird, erhöht wird, um die Temperatur der zweiten Fraktion (6) zu erhöhen, und wobei die Menge des Teils (71) der Luft der dritten Fraktion, die als Verbrennungsluft verwendet wird, verringert wird, um den umgekehrten Effekt hervorzurufen, nämlich die Verringerung der Temperatur der zweiten Luftfraktion (6).

3. Verfahren nach Anspruch 2, bei dem der vorbestimmte Wert zwischen 350 °C und 480 °C gewählt wird.

4. Verfahren nach einem der Ansprüche 1 bis 3, bei dem die Anlage den Kalzinator umfasst, der dem Zyklonvorwärmer (1) zugeordnet ist, und bei dem die erste Fraktion (5) Sekundärluft (51), die als Verbrennungsluft im Drehofen (2) verwendet wird, und Tertiärluft (51) umfasst, die getrennt bis zum Kalzinator geleitet wird.

5. Verfahren nach Anspruch 4, bei dem der Teil (71) der Luft der dritten Fraktion (7), der als Verbrennungsluft verwendet wird, mit der Tertiärluft (52) vermischt wird, ohne mit der Sekundärluft (51) vermischt zu werden.

6. Verfahren nach einem der Ansprüche 1 bis 5, bei dem die zweite Luftfraktion (6) zu einem Tauscher (8) zur Umwandlung von Wärme in elektrische Energie geleitet wird.

7. Verfahren nach Anspruch 6, bei dem die von dem Tauscher (8) gekühlte Luft als Kühlluft (40) am Schubrostkühler (3) verwendet wird.

8. Verfahren nach einem der Ansprüche 1 bis 7, bei dem nur ein Teil (71) der Luft der dritten Fraktion (7) mit der Verbrennungsluft der ersten Fraktion (5) vermischt wird, wobei ein weiterer Teil (72) getrennt von dem Teil (71) geleitet wird.

9. Verfahren nach Anspruch 8, bei dem der andere Teil (72) der dritten Fraktion (7) als Kühlluft (40) am Schubrostkühler (3) verwendet wird.

10. Verfahren nach einem der Ansprüche 1 bis 9, bei dem die aus dem Zyklonvorwärmer (1) kommenden Rauchgase (12) zu einem Tauscher (81) zur Umwandlung von Wärme in Elektrizität geleitet werden.

11. Verfahren nach Anspruch 6 oder 7 und 10, bei dem die Tauscher (8) und (81), die die zweite Luftfraktion (6) bzw. die Rauchgase (12) des Zyklonvorwärmers behandeln, für die Erzeugung von Elektrizität zusammenwirken.

12. Verfahren nach einem der Ansprüche 1 bis 11, bei dem das Sintermaterial Zementklinker ist.

## Claims

1. Method for producing sintered material from mineral raw materials (11), implemented in an installation comprising:
- a cyclone preheater (1),
- a rotary furnace (2),
- a grate cooler (3),
method wherein the raw materials (11) are preheated in the cyclone preheater (1), they are possible precalcined in a precalcinator associated with a cyclone preheater, the preheated materials are calcined and sintered in the rotary furnace (2), and the calcined materials are cooled by blowing cooling air (4,40) in the grate cooler (3), generating hot air,
and wherein the hot air is separated into three fractions, from upstream to downstream, according to the direction of advancement of the materials in the grate cooler, with said three fractions of hot air being at decreasing temperatures, comprising respectively a first air fraction (5) acting as combustion air in at least the combustion zone of the rotary furnace and/or of the potential precalciner of the installation, a second intermediate air fraction (6), and a third air fraction (7), at lower temperature,
**characterised in that**:
at least one portion (71) of the air of the third fraction (7) is directed to said at least one combustion zone of the rotary furnace and/or of the precalcinator to be used as combustion air with said first air fraction (5), and said second air fraction (6), greater than the combustion air needs, is valorised for the production of energy.

2. Method according to claim 1, wherein the flow rate of said portion (71) of the air of said third fraction (7) used as combustion air is adjusted by the action of one or several adjusting members (91, 92) in order to maintain the temperature of the air of said second air fraction (6) at a predetermined value, by increasing the flow rate of said portion (71) of the air of the third fraction used as combustion air in order to increase the temperature of the second fraction (6) and by decreasing the flow rate of the portion (71) of the air of the third fraction used as combustion air in order to provoke the opposite effect, namely the decrease in the temperature of the second air fraction (6).

3. Method according to claim 2, wherein the predetermined value is chosen between 350°C and 480°C.

4. Method according to one of claims 1 to 3, wherein said installation comprises said precalcinator associated with the cyclone preheater (1) and wherein the first fraction (5) comprises the secondary air (51) used as combustion air at the rotary furnace (2) and of the tertiary air (51), conveyed separately to said precalcinator.

5. Method according to claim 4, wherein said portion (71) of the air of said third fraction (7) used as combustion air is mixed with the tertiary air (52), without being mixed with the secondary air (51).

6. Method according to one of claims 1 to 5, wherein said second air fraction (6) is directed to an exchanger (8) for the purpose of concerting heat into electrical energy.

7. Method according to claim 6, wherein the air cooled by said exchanger (8) is used as cooling air (40) at said grate cooler (3).

8. Method according to one of claims 1 to 7, wherein only a portion (71) of the air of the third fraction (7) is mixed with the combustion air of the first fraction (5), with another portion (72) being conveyed separately from said portion (71).

9. Method according to claim 8, wherein said other portion (72) of the third fraction (7) is used as cooling air (40) at said grate cooler (3).

10. Method according to one of claims 1 to 9, wherein the fumes (12) coming from the cyclone preheater (1) are directed to an exchanger (81) for the purpose of converting heat into electricity.

11. Method according to claim 6 or 7 and 10, wherein the exchangers (8) and (81) respectively treat the second air fraction (6) and the fumes (12) of the cyclone preheater cooperate for the production of electricity.

12. Method according to one of claims 1 to 11, wherein said sintered material is cement clinker.
